# EUROPÄISCHE PATENTSCHRIFT

(11) **EP 0 827 515 B1**
(45) Veröffentlichungstag und Bekanntmachung des Hinweises auf die Patenterteilung: **30.08.2000**
(21) Anmeldenummer: 96914188.6
(22) Anmeldetag: 09.05.1996
(51) Int. Cl.: C08F 10/00, C08F 4/80

(54) **VERFAHREN ZUR HERSTELLUNG VON POLYMEREN AUS OLEFINISCH UNGESÄTTIGTEN MONOMEREN**
PROCESS FOR THE PREPARATION OF POLYMERS OF OLEFINICALLY UNSATURATED MONOMERS
PROCEDE POUR LA PREPARATION POLYMERES CONSTITUES DE MONOMERES OLEFINIQUEMENT INSATURES

(30) Priorität: 22.05.1995 DE 19518736
(43) Veröffentlichungstag der Anmeldung: 11.03.1998
(73) Patentinhaber: BASF AKTIENGESELLSCHAFT, 67056 Ludwigshafen (DE)
(72) Erfinder: LIPPERT, Ferdinand, D-67098 Bad Dürkheim (DE); HÖHN, Arthur, D-67281 Kirchheim (DE); SCHAUSS, Eckard, D-67259 Heuchelheim (DE)
(86) Internationale Anmeldenummer: EP9601964
(87) Internationale Veröffentlichungsnummer: WO9637522

(56) Entgegenhaltungen:
- EP-A- 0 454 231
- EP-A- 0 610 601
- J AM CHEM SOC, Bd. 117, 14.Juni 1995, Seiten 6414-6415, XP002010857 JOHNSON LYNDA: "New Pd(II) and Ni(II)-based catalysts for polymerization of ethylene and alpha-olefins"

## Beschreibung

Die vorliegende Erfindung betrifft ein Verfahren zur Herstellung von Polymeren aus olefinisch ungesättigten Monomeren durch Polymerisation von ungesättigten Monomeren in Gegenwart eines Metallkomplexes der allgemeinen Formel (I) 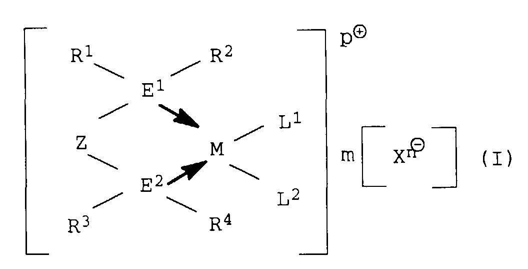 in der die Substituenten und Indizes folgende Bedeutung haben:
- M: ein Metall aus der Gruppe VIIIB des Periodensystems der Elemente
- E¹, E²: ein Element aus der Gruppe VA des Periodensystems der Elemente,
- Z: eine verbrückende Struktureinheit mit einem verbrückenden Atom aus der Gruppe IVA, VA oder VIA des Periodensystems der Elemente,
- R¹ bis R⁴: Substituenten, ausgewählt aus der Gruppe bestehend aus C₁- bis C₂₀-Kohlenstofforganischen und C₃- bis C₃₀-Siliciumorganischen Resten, wobei die Reste ein Element oder mehrere Elemente der Gruppe IVA, VA, VIA und VIIA des Periodensystems der Elemente enthalten können,
- L¹, L²: formal geladene oder neutrale Liganden
- X: ein- oder mehrwertige Anionen
- p: 0, 1 oder 2
- m, n: 0, 1 oder 2
wobei p = m x n.

Die Polymerisation von olefinisch ungesättigten Monomeren, beispielsweise von Ethylen, C₃- bis C₈-Alk-1-enen und Acrylsäurederivaten ist für unterschiedliche Polymerisationsverfahren gut bekannt, und die erhältlichen Polyolefine werden weithin in vielen Anwendungsgebieten, zum Beispiel als Folien, Formkörper und Fasern kommerziell verwendet.

Die Polymerisation der Olefine wird, unter anderem, durch Mischkatalysatoren aus Verbindungen der frühen Übergangsmetalle (Titan, Zirconium etc.) und Alkylverbindungen der Hauptgruppenmetalle (z.B. Aluminiumalkyle) - sogenannte Ziegler-Katalysatoren - oder aber auch durch radikalische Initiatoren katalysiert, bzw. initiiert.

Ziegler-Katalysatoren haben jedoch einige Nachteile. Sie reagieren in der Regel, teilweise sehr heftig, mit Feuchtigkeit und Sauerstoff, wobei ihre katalytische Aktivität im allgemeinen verloren geht.

Weiterhin sind diese Katalysatoren im allgemeinen nicht in der Lage, ungesättigte Verbindungen, welche funktionelle Gruppen, wie zum Beispiel Carbonsäuregruppen oder Estergruppen enthalten, zu (co)polymerisieren.

Auch läuft die Polymerisation von cyclischen, olefinisch ungesättigten Monomeren oder aber von mehrfach olefinisch ungesättigten, linearen Monomeren oft nicht im gewünschten Sinne, nämlich als Polyinsertionsreaktion ab, sondern es treten Nebenreaktionen auf, wie Ringöffnung des cyclischen Monomeren oder Ringbildung des linearen Monomeren. Die dabei entstandenen Polymere weisen eine hohe Uneinheitlichkeit sowohl der chemischen Zusammensetzung als auch der Molekulargewichtsverteilung auf.

Radikalische Initiatoren sind im allgemeinen unter hohem Druck, in der Lage beispielsweise Olefine mit polaren, ungesättigten Monomeren zu copolymerisieren, jedoch ist der Einbau des Comonomeren oft uneinheitlich und die Polymerstruktur verzweigt, welches beispielsweise zu einer geringeren Polymerfolienqualität führt.

Durch diese Charakteristika ist der Anwendungsbereich der resultierenden Polymeren, die nach den verschiedenen Polymerisationsverfahren erhalten werden eingeschränkt, und es ist daher wünschenswert nach alternativen Polymeren bzw. Polymerisationsverfahren zu suchen, welche die genannten Nachteile nicht oder nur in untergeordnetem Maße aufweisen.

EP-A 0 589 527 beschreibt Katalysatorsysteme für die Olefin-Homopolymerisation und Olefin-Copolymerisation auf der Basis von speziellen Palladium-Phosphankomplexen. Sowohl die präparative Zugänglichkeit als auch das Polymerisationsverhalten dieser Katalysatoren lassen jedoch zu wünschen übrig. So erhält man in polaren Lösungsmitteln wie Methanol, Ethylenglykol oder Wasser nur geringe Polymerisationsgrade (Oligomere mit 3 bis 20 Monomereinheiten). Aber auch in unpolaren Solventien wie Diethylenglycoldimethylether (Diglyme) werden nur maximale Molmassen Mn von 5600 erreicht, wobei dann aber nur Spuren des Comonomeren eingebaut werden. Die Verwendung von internen Olefinen ist darüber hinaus nicht beschrieben, und der Doppelbindungsgehalt der Polymeren und deren Molmassenverteilung Mw/Mn ist ebenfalls nicht offenbart.

EP-A 0 454 231 beschreibt Katalysatorsysteme für die Polymerisation von Ethylen, Olefinen und Alkinen auf der Basis von kationischen Metallkomplexen von späten Übergangsmetallen (Gruppe VIII). Diese Katalysatoren sind aber Verunreinigungen gegenüber sehr empfindlich. Die erreichbaren Produktivitäten lassen ebenfalls zu wünschen übrig. Es werden keine polaren Copolymerisate beschrieben.

Der vorliegenden Erfindung lag die Aufgabe zugrunde, neue Polymerisationsverfahren zur Verfügung zu stellen, die die geschilderten Nachteile nicht aufweisen und die insbesondere auch zu Copolymeren mit in überwiegend linearer Sequenz eingebauten polaren Comonomeren führen.

Demgemäß wurden Verfahren zur Herstellung von Polymeren aus olefinisch ungesättigten Monomeren durch Polymerisation von ungesättigten Monomeren in Gegenwart eines Metallkomplexes der allgemeinen Formel (I) 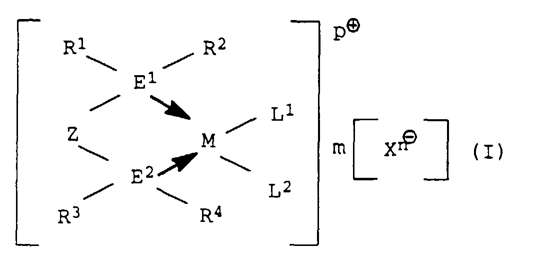 in der die Substituenten und Indizes folgende Bedeutung haben:
- M: ein Metall aus der Gruppe VIIIB des Periodensystems der Elemente
- E¹, E²: ein Element aus der Gruppe VA des Periodensystems der Elemente,
- Z: eine verbrückende Struktureinheit mit einem verbrückenden Atom,
- R¹ bis R⁴: Substituenten, ausgewählt aus der Gruppe bestehend aus C₁- bis C₂₀-kohlenstofforganischen und C₃- bis C₃₀-siliciumorganischen Reste, wobei die Reste ein Element oder mehrere Elemente der Gruppe IVA, VA, VIA und VIIA des Periodensystems der Elemente enthalten können,
- L¹, L²: formal geladene oder neutrale Liganden
- X: ein- oder mehrwertige Anionen
- p: 0, 1 oder 2
- m, n: 0, 1 oder 2
wobei p = m x n
gefunden.

Als Metalle M der in dem erfindungsgemäßen Polymerisationsverfahren verwendeten Metallkomplexe eignen sich die Metalle der Gruppe VIIIB des Periodensystems der Elemente, also neben Eisen, Cobalt und Nickel vornehmlich die Platinmetalle wie Ruthenium, Rhodium, Osmium, Iridium und Platin sowie ganz besonders Palladium. Die Metalle können in den Komplexen formal ungeladen, formal einfach positiv geladen, oder formal zweifach positiv geladen vorliegen.

Als Elemente E¹ und E² kommen die Elemente der V. Hauptgruppe des Periodensystems der Elemente (Gruppe VA), also Stickstoff, Phosphor, Arsen, Antimon, oder Bismut in Betracht. Besonders geeignet sind Stickstoff oder Phosphor, insbesondere Phosphor. Die Chelatverbindung kann unterschiedliche Elemente E¹ und E² enthalten, so zum Beispiel Stickstoff und Phosphor.

Die verbrückende Struktureinheit Z ist eine Atomgruppierung, die die beiden Elemente E¹ und E² miteinander verbindet. Ein Atom aus der Gruppe IVA, VA oder VIA des Periodensystems der Elemente bildet die verbindende Brücke zwischen E¹ und E². Mögliche freie Valenzen dieses Brückenatoms können mannigfaltig abgesättigt sein, so zum Beispiel durch Substitution mit Wasserstoff, Elementen aus der Gruppe IVA, VA, VIA oder VIIA des Periodensystems der Elemente. Diese Substituenten können auch mit dem Brückenatom einen Ring bilden.

Gut geeignete verbrückende Struktureinheiten sind solche mit einem Element aus der Gruppe IVA des Periodensystems der Elemente wie zum Beispiel Methylen (-CH₂-), Ethyliden (CH₃(H)C=), 2-Propyliden ((CH₃)₂C=) oder Diphenylmethylen ((C₆H₅)₂C=).

Als besonders geeignete verbrückende Struktureinheiten seien solche genannt wie -CR⁵R⁶- oder -SiR⁵R⁶- worin R⁵ und R⁶ für Wasserstoff und C₁- bis C₁₀-kohlenstofforganischer Rest steht. R⁵ und R⁶ können auch zusammen mit dem Brückenatom einen 3- bis 10-gliedrigen Ring bilden. Beispielhaft seien als einatomig verbrückende Struktureinheiten genannt Methylen (-CH₂-), Ethyliden (CH₃(H)C=), 2-Propyliden ((CH₃)₂C=), Diphenylmethylen ((C₆H₅)₂C=), Dialkylsilylen, wie Dimethylsilylen, Diphenylsilylen; weiterhin als cyclysche Brückenglieder Cyclopropyliden, Cyclobutyliden, Cyclopentyliden, Cyclohexyliden.
Bevorzugte verbrückende Struktureinheiten sind Methylen (-CH₂-), Ethyliden (CH₃(H)C=), 2-Propyliden ((CH₃)₂C=), Dimethylsilylen, Diphenylsilylen, insbesondere Methylen.

Als kohlenstofforganische Reste R¹ bis R⁴ kommen aliphatische sowie cycloaliphatische und aromatische mit 1 bis 20 C-Atomen in Betracht, beispielsweise die Methyl-, Ethyl-, 1-Propyl-, 1-Butyl-, 1-Pentyl, 1-Hexyl- und 1-Octylgruppe. Ferner sind lineare Arylalkylgruppen mit jeweils 1 bis 10 C-Atomen im Alkylrest und 6 bis 20 C-Atomen im Arylrest geeignet, wie beispielsweise Benzyl- sowie Arylreste wie zum Beispiel Phenyl, Tolyl und andere substituierte Phenylgruppen.
Die Reste R¹ bis R⁴ sollen vorzugsweise soweit raumerfüllend sein, daß das Zentralatom, z.B. das Palladiumatom, mit dem die Atome E¹ und E² den aktiven Komplex bilden, weithin abgeschirmt wird. Reste, welche dieser Forderung genügen, sind beispielsweise cycloaliphatische Reste sowie verzweigte aliphatische Reste, darunter besonders solche mit Verzweigung in α-Position.

Als cycloaliphatische Reste kommen die Cyclopentyl-, Cyclohexylgruppen und Menthylgruppen sowie besonders bicyclische Reste wie die Norbornyl-, Pinanyl-, Bornylgruppe und Bicyclononylgruppe in beliebiger Verknüpfung des Ringgerüstes mit den Atomen E¹ und E² in Betracht. Vorzugsweise enthalten die cycloaliphatischen Reste insgesamt 5 bis 20 C-Atome.

Als verzweigte aliphatische Reste eignen sich C₃- bis C₂₀-, vorzugsweise C₃- bis C₁₂-Alkylreste, wie zum Beispiel die iso-Propyl-, iso-Butyl-, sec.-Butyl-, Neopentyl-und tert.-Butylgruppe, weiterhin Alkylaryl mit jeweils 1 bis 10 C-Atomen im Alkylrest und 6 bis 20 C-Atomen im Arylrest.

Besonders geeignet sind die tert.-Butylgruppe, die iso-Propylgruppe, die sec.-Butylgruppe und die Menthylgruppe.

Auch Alkylgruppen mit weiter außen liegender Verzweigung sind als Substituenten R¹ bis R⁴ gut geeignet, wie die iso-Butyl-, die 3-Methyl-but-2-yl- und 4-Methylpentylgruppe.

Auf die chemische Natur der Reste R¹ bis R⁴ kommt es nach den bisherigen Beobachtungen nicht entscheidend an, d.h. die Reste können auch Atome aus der Gruppe IVA, VA, VIA oder VIIA des Periodensystems der Elemente enthalten, wie zum Beispiel Halogen, Sauerstoff, Schwefel, Stickstoff, Silicium, hier beispielsweise die Bis(trimethylsilyl)methylgruppe. Auch funktionelle Gruppen wie zum Beispiel Hydroxy, Alkoxy und Cyan, die sich unter den Polymerisationsbedingungen inert verhalten, kommen in diesem Zusammenhang in Betracht.

Bevorzugte Heterosubstituenten R¹ bis R⁴ sind C₃- bis C₃₀-Siliciumorganische Reste, das heißt tetravalente Siliciumatome die an E¹ oder E² gebunden sind und deren übrige Valenzen mit drei Kohlenstofforganischen Resten abgesättigt sind, wobei die Summe der Kohlenstoffatome dieser drei an Silicium gebundenen Reste im Bereich von drei bis dreißig liegt. Beispielsweise seien genannt die Trimethylsilyl-, tert.-Butyldimethylsilyl- oder Triphenylsilylgruppe, insbesondere die Trimethylsilylgruppe.

Vorzugsweise verwendet man als Chelatligand Diphosphane welche mit einer Methylengruppe verbrückt sind; besonders bevorzugt mit C₃- bis C₁₀-cycloaliphatischen oder verzweigten C₃- bis C₂₀-aliphatischen Resten R¹ bis R⁴ substituierte methylenverbrückte Diphosphane, wie beispielsweise Bis(di-tert.-butylphosphino)methan, [(Di-tert.-butylphosphino) (Di-cyclohexylphosphino]methan oder Bis(di-cyclohexylphosphino)methan deren gute Eignung für das erfindungsgemäße Verfahren derzeit der Methylenverknüpfung der beiden Phosphoratome und der räumlichen Struktur der Reste R¹ bis R⁴ zugeschrieben wird.

Eine ganz besonders bevorzugte Verbindung als Chelatligand ist das Bis(di-tert.-butylphosphino)methan.

Die Liganden L¹, L² tragen je nach formaler Oxidationsstufe des Zentralmetalls M eine oder zwei formal negative Ladungen, oder aber wenn das Metall formal ungeladen ist, so sind die Liganden L¹, L² ebenfalls formal ungeladen.

Die chemische Natur der Liganden ist nicht kritisch. Nach dem derzeitigen Kenntnisstand haben sie die Funktion den Rest des Metallkomplexes gegen Zersetzung, beispielsweise Abscheiden des Metalls oder unspezifische Reaktionen, beispielsweise Aggregierung der Komplexfragmente, zu stabilisieren.

Geeignete formal geladene anorganische Liganden L¹, L² sind Halogenide, Sulfate, Phosphate oder Nitrate.

Vorzugsweise verwendet man Halogenide wie Chloride, Bromide, Iodide und insbesondere Chloride.

Geeignete formal geladene organische Liganden L¹, L² sind C₁- bis C₂₀-aliphatische, C₃- bis C₃₀-cycloaliphatische, C₇- bis C₂₀-Aralkylreste mit C₆- bis C₁₀-Arylrest und C₁- bis C₁₀-Alkylrest, C₆- bis C₂₀-aromatische Reste, wie beispielsweise Methyl, Ethyl Propyl, iso-Propyl, tert.-Butyl, neo-Pentyl, Cyclohexyl, Benzyl, Neophyl, Phenyl und substituierte Phenylreste.

Weiterhin eignen sich als formal geladene organische Liganden L¹, L² C₁- bis C₂₀-Carboxylate wie beispielsweise Acetat, Propionat, Oxalat, Benzoat, Citrat sowie Salze von organischen Sulfonsäuren wie Methylsulfonat, Trifluormethylsulfonat, p-Toluolsulfonat. Vorzugsweise verwendet man C₁- bis C₇-Carboxylate, Sulfonsäurederivate und insbesondere Acetat und p-Toluolsulfonat.

Als formal ungeladene Liganden L¹, L² sind generell Lewisbasen geeignet, also Verbindungen mit einem freien Elektronenpaar. Besonders gut geeignet sind Lewisbasen deren freies Elektronenpaar oder deren freie Elektronenpaare sich an einem Stickstoff- oder Sauerstoffatom befinden, also beispielsweise Nitrile, R-CN, Ketone, Ether, Alkohole. Vorzugsweise verwendet man C₁- bis C₁₀-Nitrile wie Acetonitril, Propionitril, Benzonitril oder C₂- bis C₁₀-Ketone wie Aceton, Acetylaceton oder aber C₂- bis C₁₀-Ether, wie Dimethylether, Diethylether, Tetrahydrofuran. Insbesondere verwendet man Acetonitril oder Tetrahydrofuran.

Je nach formaler Ladung des, das Metall M enthaltenden Komplexfragments, enthält der Metallkomplex (I) Anionen. Ist das M-enthaltende Komplexfragment formal ungeladen, so enthält der Komplex kein Anion X.

Die chemische Natur der Anionen X ist nicht kritisch. Nach dem derzeitigen Kenntnisstand ist es jedoch von Vorteil wenn sie möglichst wenig nucleophil sind, d.h. eine möglichst geringe Tendenz haben mit dem Zentralmetall M eine chemische Bindung einzugehen. Geignete Anionen X sind beispielsweise Perchlorat, Sulfat, Phosphat, Nitrat und Carboxylate, wie beispielsweise Acetat, Trifluoracetat, Trichloracetat, Propionat, Oxalat, Citrat, Benzoat, sowie konjugierte Anionen von Organosulfonsäuren wie zum Beispiel Methylsulfonat, Trifluormethylsulfonat und para-Toluolsulfonat, weiterhin Tetrafluoroborat, Tetraphenylborat, Tetrakis(pentafluorophenyl)borat, Hexafluorophosphat, Hexafluoroarsenat oder Hexafluoroantimonat. Vorzugsweise verwendet man Perchlorat, Trifluoracetat, Sulfonate wie Methylsulfonat, Trifluormethylsulfonat, p-Toluolsulfonat, Tetrafluoroborat oder Hexafluorophosphat und insbesondere Trifluoracetat, Perchlorat oder p-Toluolsulfonat.

Als olefinisch ungesättigte Verbindungen kommen grundsätzlich alle Monomere dieser Verbindungsklasse in Betracht.

Geeignet sind besonders Ethylen und C₃-C₁₀-Alk-1-ene wie Propylen, 1-Buten, 1-Penten, 1-Hexen, 1-Hepten, 1-Octen, 1-Nonen und 1-Decen. Es können auch interne E- oder Z-Olefine wie 2-Buten, 2-Penten, 2- und 3-Hexen, vorteilhaft eingesetzt werden; ferner eignen sich als Monomere Diene wie 1,3-Butadien, 1,4-Hexadien, 1,5-Hexadien, sowie daneben Cycloolefine wie Cyclopenten, Cyclohexen, Norbornen und Norbornadien, Cyclopentadien und Dicyclopentadien.

Als olefinisch ungesättigte aromatische Monomere seien in erster Linie Styrol und α-Methyl-styrol genannt.
Besondere Bedeutung als Monomere haben ferner mit funktionellen Gruppen substituierte Olefine. Als funktionelle Gruppen kommen in Frage die Carboxylgruppe, -COOH und deren Derivate, wie zum Beispiel Ester, Halogenide und Amide, ferner die Hydroxylgruppe, die Cyangruppe, -CN, Ketogruppe, Aldehydgruppe und Carboxylatgruppe sowie die Silylgruppe, -SiR₃, wobei R Wasserstoff oder ein organischer Rest mit 1 bis 15 Kohlenstoffatomen bedeutet.

Besonders geeignete, mit funktionellen Gruppen substituierte Olefine sind Acrylsäure und Methacrylsäure sowie deren Derivate, darunter insbesondere die Nitrile, die Amide und die C₁-C₁₀-Alkylester wie beispielsweise Acrylnitril, Methacrylnitril, Methylacrylat, Ethylacrylat, Propylacrylat, Butylacrylat, tert.-Butylacrylat, 2-Ethylhexylacrylat, Methylmethacrylat, Ethylmethacrylat, Propylmethacrylat. Weitere geeignete Monomere sind Vinylchlorid, Vinylacetat, Vinylpropionat, Maleinsäureanhydrid und N-Vinylpyrrolidon.

Selbstverständlich können auch Mischungen verschiedener Monomeren eingesetzt werden.

Das molare Verhältnis zwischen den unterschiedlichen Monomeren kann weitgehend frei gewählt werden.

Die Polymerisationsbedingungen sind an sich unkritisch. Die Polymerisationen können sowohl absatzweise als auch kontinuierlich durchgeführt werden.

Drücke von 100 bis 500000 kPa, vorzugsweise 200 bis 350000 kPa und insbesondere 500 bis 30000 kPa, Temperaturen von (-50) bis 400°C, bevorzugt 20 bis 250°C und insbesondere 40 bis 150°C haben sich als geeignet erwiesen.

Polymerisationsreaktionen mit Hilfe der offenbarten Katalysatorsysteme lassen sich in der Gasphase, in Suspension, in flüssigen und in überkritischen Monomeren und in, unter den Polymerisationsbedingungen inerten, Lösungsmitteln durchführen.

Geeignete inerte Lösungsmittel sind Alkohole wie Methanol, Ethanol, Propanol, i-Propanol, 1-Butanol und tert.-Butanol, Sulfoxide und Sulfone, beispielsweise Dimethylsulfoxid, Ester wie Essigester und Butyrolacton, Ether wie Tetrahydrofuran, Dimethylethylenglycol und Diisopropylether sowie aromatische Lösungsmittel wie Benzol, Toluol, Ethylbenzol oder Chlorbenzol oder Gemische derselben.

Das Molekulargewicht der Polymere läßt sich durch die Variation der Polymerisationstemperatur und durch den Zusatz von Wasserstoff in üblicher Weise regeln.

Die unter Verwendung des erfindungsgemäßen Verfahrens hergestellten Polymere zeichnen sich im allgemeinen durch eine hohe Molmasse, enge Molmassenverteilung und hohen Anteil an Doppelbindungen aus.

Die Polymere eignen sich zur Herstellung von Formkörpern, insbesondere von Formkörpern für Verpackungen und sowie von Folien und Fasern und für Haftvermittler und lassen sich aufgrund ihrer reaktiven Doppelbindungen leicht chemisch modifizieren.

### Beispiele 1 bis 4

In einem 0,3-l-Autoklaven wurden 75 ml des Lösungsmittels (Beispiel 1 und 4 Methanol, Beispiel 2 und 3 Toluol) und der entsprechende Palladiumkomplex (siehe Tabelle 1) vorgelegt. Danach wurde bei der gewünschten Temperatur Ethylen bis zu dem Gesamtdruck von 6000 kPa (siehe Tabelle 1) aufgepreßt und 5 Stunden lang polymerisiert. Die Reaktionstemperatur und der Druck wurden während der gesamten Reaktionsdauer konstant gehalten, wonach die Polymerisation durch Abkühlen und Entspannen des Autoklaven abgebrochen, das Reaktionsgemisch filtriert und das Polymerisat isoliert wurde.

Die Verfahrensparameter, eingesetzte Mengen an Katalysator und Lösungsmittel sowie die erhaltenen Mengen an Polymerisat und deren Schmelzpunkte (bestimmt mit der Methode der DSC) sind der Tabelle 1 zu entnehmen.

### Erläuterung der Abkürzungen:

dtbpm = Bis(di-tert.-butylphosphino)methan

MeCN = Acetonitril

**Tabelle:**

| Verfahrensparameter, Polymereigenschaften | | | | |
|---|---|---|---|---|
| Bsp. | Katalysator/ (mmol) | Temperatur [°C] | Ausbeute [g] | Schmelzpunkt [°C] |
| 1 | [(dtbpm)Pd(MeCN)₂](CF₃CO₂)₂ | 85 | 2 | 105 |
| 2 | [(dtbpm)Pd(MeCN)₂](ClO₄)₂ | 70 | 1,5 | 146 |
| 3 | [(Ph₂P(̵CH₂)̵₃PPh₂)Pd(MeCN)₂](ClO₄)₂ | 70 | 0,5 | 143 |
| 4 | [(dtbpm)Pd(MeCN)₂](CF₃SO₃)₂ | 50 | 0,8 | 122 |

## Patentansprüche

1. Verfahren zur Herstellung von Polymeren aus olefinisch ungesättigten Monomeren durch Polymerisation von ungesättigten Monomeren in Gegenwart eines Metallkomplexes der allgemeinen Formel (I) 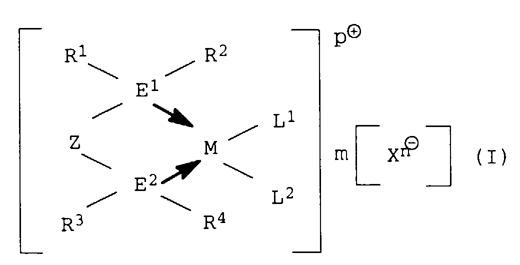 in der die Substituenten und Indizes folgende Bedeutung haben:
M ein Metall aus der Gruppe VIIIB des Periodensystems der Elemente
E¹, E² ein Element aus der Gruppe VA des Periodensystems der Elemente,
Z eine verbrückende Struktureinheit mit einem verbrückenden Atom aus der Gruppe IVA, VA oder VIA des Periodensystems der Elemente,
R¹ bis R⁴ Substituenten, ausgewählt aus der Gruppe bestehend aus C₁- bis C₂₀-Kohlenstofforganischen und C₃- bis C₃₀-Siliciumorganischen Reste, wobei die Reste ein Element oder mehrere Elemente der Gruppe IVA, VA, VIA und VIIA des Periodensystems der Elemente enthalten können,
L¹, L² formal geladene oder neutrale Liganden
X ein- oder mehrwertige Anionen
p 0, 1 oder 2
m, n 0, 1 oder 2
wobei p = m x n.

2. Verfahren nach Anspruch 1, dadurch gekennzeichnet, daß man die Polymerisation in Gegenwart eines Metallkomplexes der allgemeinen Formel (I) ausführt, wobei Z eine Methylengruppe ist.

3. Verfahren nach Anspruch 1 oder 2, dadurch gekennzeichnet, daß man die Polymerisation in Gegenwart eines Metallkomplexes der allgemeinen Formel (I) ausführt, wobei X Trifluoracetat, Perchlorat oder p-Toluolsulfonat ist.

4. Verfahren nach den Ansprüchen 1 bis 3, in welchem man als olefinisch ungesättigte Verbindungen Olefine, Diolefine oder mit funktionellen Gruppen substituierte Olefine sowie Vinylaromaten einsetzt.

5. Verfahren nach den Ansprüchen 1 bis 4, in welchem als olefinisch ungesättigte Verbindungen C₂- bis C₂₀-Alk-1-ene, interne C₄- bis C₂₀-Alkene, C₄- bis C₂₀-Diolefine oder α-β-ungesättigte Carbonsäuren oder deren Derivate eingesetzt werden.

## Claims

1. A process for preparing polymers of olefinically unsaturated monomers by polymerization of unsaturated monomers in the presence of a metal complex of the general formula (I) 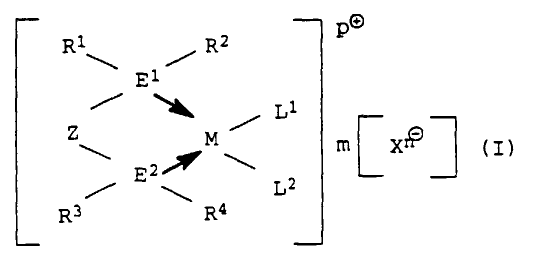 where the substituents and indices have the following meanings:
M is a metal from group VIIIB of the Periodic Table of the Elements,
E¹, E² are each an element from group VA of the Periodic Table of the Elements,
Z is a bridging structural unit having a bridging atom from group IVA, VA or VIA of the Periodic Table of the Elements,
R¹ to R⁴ are substituents selected from the group consisting of C₁-C₂₀-organic and C₃-C₃₀-organosilicon radicals, where the radicals can contain one or more elements of groups IVA, VA, VIA and VIIA of the Periodic Table of the Elements,
L¹, L² are formally charged or neutral ligands,
X is a monovalent or polyvalent anion,
p is 0, 1 or 2,
m, n are 0, 1 or 2,
where p = m x n.

2. A process as claimed in claim 1, wherein the polymerization is carried out in the presence of a metal complex of the formula (I) in which Z is a methylene group.

3. A process as claimed in claim 1 or 2, wherein the polymerization is carried out in the presence of a metal complex of the formula (I) in which X is trifluoroacetate, perchlorate or p-toluenesulfonate.

4. A process as claimed in any of claims 1 to 3, wherein the olefinically unsaturated compounds used are olefins, diolefins or olefins substituted by functional groups, or vinylaromatics.

5. A process as claimed in any of claims 1 to 4, wherein the olefinically unsaturated compounds used are C₂-C₂₀-alk-1-enes, internal C₄-C₂₀-alkenes, C₄-C₂₀-diolefins or α,β-unsaturated carboxylic acids or their derivatives.

## Revendications

1. Procédé de préparation de polymères à base de monomères oléfiniquement insaturés par polymérisation de monomères insaturés en présence d'un complexe métallique de la formule générale (I) : 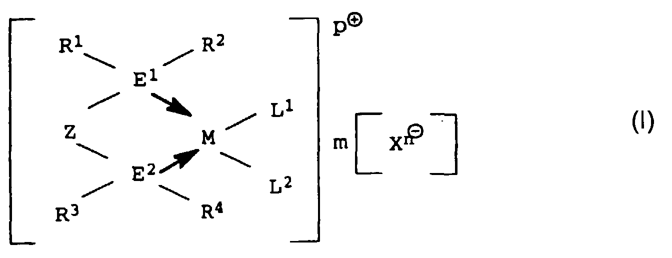 dans laquelle les substituants et indices ont les significations suivantes :
M représente un métal du groupe VIIIB du système périodique des éléments,
E¹ et E² représentent un élément du groupe VA du système périodique des éléments,
Z représente une unité structurelle formant pont, comportant un atome de pontage du groupe IVA, VA ou VIA du système périodique des éléments,
R¹ à R⁴ représentent des substituants choisis parmi le groupe constitué des radicaux organiques du carbone en C₁ à C₂₀ et des radicaux organosiliciques en C₃ à C₃₀, les radicaux pouvant contenir un ou plusieurs éléments des groupes IVA, VA, VIA et VIIA du système périodique des éléments,
L¹ et L² représentent des ligands présentant une charge formelle ou neutres,
X représente des anions mono- ou polyvalents,
p est égal à 0, 1 ou 2,
m et n sont égaux à 0, 1 ou 2,
p = m x n.

2. Procédé suivant la revendication 1, caractérisé en ce qu'on effectue la polymérisation en présence d'un complexe métallique de la formule générale (I), Z étant un groupe méthylène.

3. Procédé suivant l'une des revendications 1 et 2, caractérisé en ce qu'on effectue la polymérisation en présence d'un complexe métallique de la formule générale (I), X étant du trifluoroacétate, du perchlorate ou du p-toluènesufonate.

4. Procédé suivant l'une des revendications 1 à 3, dans lequel on met en oeuvre, comme composés oléfiniquement insaturés, des oléfines, des dioléfines ou des oléfines substituées par des groupes fonctionnels, ainsi que des substances vinylaromatiques.

5. Procédé suivant l'une des revendications 1 à 4, dans lequel on met en oeuvre comme composés oléfiniquement insaturés, des alc-1-ènes en C₂ à C₂₀, des alcènes en C₄ à C₂₀ internes, des dioléfines en C₄ à C₂₀ ou des acides carboxyliques α-β-insaturés ou leurs dérivés.
